(19) Europäisches Patentamt

European Patent Office

Office européen des brevets

(11) Veröffentlichungsnummer: **0 395 657 B1**

# (12) EUROPÄISCHE PATENTSCHRIFT

(45) Veröffentlichungstag der Patentschrift:
14.08.91 Patentblatt 91/33

(21) Anmeldenummer: 88908687.2

(22) Anmeldetag: 05.10.88

(86) Internationale Anmeldenummer:
PCT/EP88/00889

(87) Internationale Veröffentlichungsnummer:
WO 89/03320 20.04.89 Gazette 89/09

(51) Int. Cl.⁵: **B60K 41/26, F16H 47/02, B60T 13/22**

## (54) HYDROSTATISCH-MECHANISCHES ANTRIEBSSYSTEM.

(30) Priorität: 13.10.87 DE 3734622

(43) Veröffentlichungstag der Anmeldung:
07.11.90 Patentblatt 90/45

(45) Bekanntmachung des Hinweises auf die
Patenterteilung:
14.08.91 Patentblatt 91/33

(84) Benannte Vertragsstaaten:
BE DE FR IT

(56) Entgegenhaltungen:
DE-A- 3 149 473
DE-A- 3 425 757
DE-B- 1 294 233
FR-A- 2 442 740

(73) Patentinhaber: ZAHNRADFABRIK
FRIEDRICHSHAFEN AKTIENGESELLSCHAFT
Löwentaler Strasse 100 Postfach 2520
W-7990 Friedrichshafen 1 (DE)

(72) Erfinder: MEISINGER, Erwin
Böhmerwaldstrasse 33
W-8395 Hauzenberg (DE)
Erfinder: ZIMMER, Jürgen
Adalbert Stifter Strasse 5
W-8390 Passau (DE)

Jouve, 18, rue Saint-Denis, 75001 PARIS

## Beschreibung

Die Erfindung betrifft ein hydrostatisch-mechanisches Antriebssystem und ein Verfahren zum Betrieb eines hydrostatischmechanischen Antriebssystems nach dem Oberbegriff des Anspruchs 1.

Fahrkomfort und Betriebssicherheit von modernen Land- oder Baumaschinenfahrzeugen erfordern es, das Fahrzeug verkehrsgerecht in verschiedenen Geschwindigkeitsbereichen betreiben zu können, das Fahrzeug sicher abstellen zu können und diese Funktionen mit hoher Zuverlässigkeit bereitzustellen. Getriebe und Bremskomponenten von Land- und Baumaschinenfahrzeugen sind in besonderer Weise der Verschmutzung und der Gefahr der Beschädigung ausgesetzt. Die komplexen Funktionen, die modernen Land- und Baumaschinenfahrzeugen abverlangt werden, bringen eine hohe Zahl zu bedienender Stellorgane mit sich und erhöhen die Möglichkeiten menschlicher Fehler beim Betrieb der Fahrzeuge.

Es ist bekannt (DE-A-3425757), ein hydrostatischmechanisches Antriebssystem mit regelbarem Antriebsuntersetzungsverhältnis so auszurüsten, daß Stellglieder ein regelbares hydrostatisches Getriebe in Abhängigkeit von einer Änderung des Untersetzungsverhältnisses eines mechanischen Getriebes automatisch umschalten.

Aus der DE-A-3149473 ist ferner ein hydrostatisches Antriebssystem bekannt geworden, das einen Hydraulikmotor mit variabler Fördermenge aufweist und bei dem eine Parkbremse, die federbeaufschlagt ist und mit dem Druckmedium aus dem Hochdruckteil ausgelöst wird, auf der Abtriebswelle des Hydraulikmotors angebracht ist. Übersteigt der Druck des Druckmediums eine vorgegebene Höhe, so wird der Hydraulikmotor in eine Stellung für hohe Fördermenge umgestellt, wodurch zum Abbremsen des Fahrzeugs eine hohe Bremskraft erzeugt werden soll.

Aufgabe der vorliegenden Erfindung ist es, ein hydrostatisch-mechanisches Mehrbereichsantriebssystem mit einer mechanischen Feststellbremse besonders betriebssicher zu kombinieren und die Kontrolle des hydrostatisch mechanischen Mehrbereichsantriebs und der Feststellbremse besonders bedienungsfreundlich zu gestalten.

Erfindungsgemäß wird diese Aufgabe dadurch gelöst, daß in ein mechanisches Zweistufengetriebe eine mechanische Feststellbremse integriert ist, die direkt auf dessen Abtriebswelle wirkt und daß zur Betätigung der Feststellbremse über eine Druckleitung Druckmedium aus dem Hochdruckteil des hydrostatischen Kreislaufs abgezweigt und ein 3/2-Wegeventil geschaltet wird, das einen Zylinder der Feststellbremse mit dem Druck einer Servohydraulikpumpe des hydrostatischen Getriebes beaufschlagt oder mit einer druckfreien Rücklaufleitung verbindet.

Da die Feststellbremse direkt auf die Abtriebswelle des mechanischen Zweistufengetriebes wirkt, ist das Fahrzeug, unabhängig davon, ob ein Gang eingelegt ist, bei geschlossener Feststellbremse gegen Wegrollen gesichert. Da die Feststellbremse in das Gehäuse des mechanischen Getriebes integriert ist, ist eine besonders kompakte Bauweise von Getriebe und Feststellbremse möglich, die erheblich größere Sicherheit gegen Beschädigung und Verschmutzung der Feststellbremse mit sich bringt.

Da die Betätigung der Feststellbremse vom Betriebszustand des hydrostatischen Getriebes abhängt, ist eine besonders betriebssichere Funktion der Feststellbremse gewährleistet und die Bedienung des Fahrzeugs für den Fahrer um eine Stellgröße vereinfacht.

Die erfindungsgemäße Anordnung von mechanischem Getriebe mit Feststellbremse und hydrostatischem Antrieb und die Betätigung der Stelleinrichtungen für den verstellbaren Hydromotor und die Schaltung des mechanischen Zweistufengetriebes mit demselben hydraulischen Druckmedium, das auch die Feststellbremse beaufschlagt, führt insgesamt zu einem besonders bedienungs- und betriebssicheren Antriebssystem und Verfahren zur Steuerung eines solchen Antriebssystems.

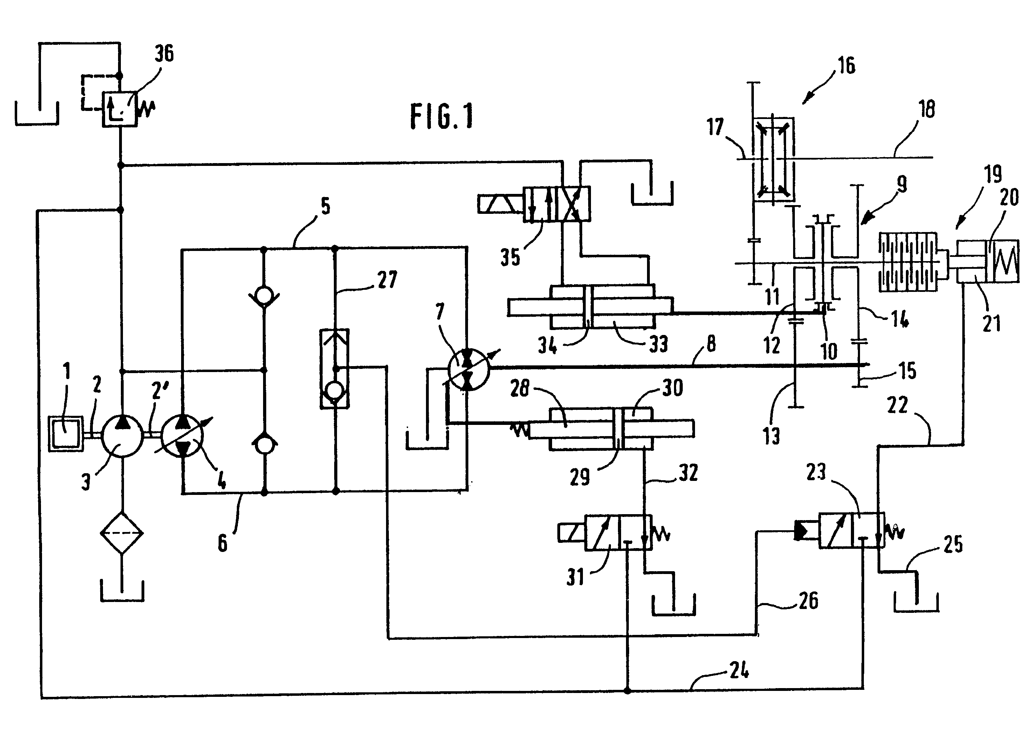

In den Fig. 1 bis 3 sind Ausführungsbeispiele der Erfindung dargestellt.

In Fig. 1 ist ein Fahrzeugantriebssystem insgesamt vorgezeigt. Es besteht aus einem Antriebsmotor 1, der über eine Antriebswelle 2 eine Servohydraulikpumpe 3 zur Erzeugung des Servodruckes und über eine Wellenverlängerung 2' eine Hydraulikpumpe 4 mit verstellbarer Förderleistung antreibt. Die Hydraulikpumpe 4 ist über Arbeitsleitungen 5 und 6 mit einem Hydraulikmotor 7 mit verstellbarem Durchsatz verbunden. In Abhängigkeit von einem in bekannter Weise zu betätigenden Schaltring 10 ist die Drehzahl einer Abtriebswelle 11 durch das Übersetzungsverhältnis zweier Stirnradpaare 12/13 und 14/15 bestimmt.

Die Abtriebswelle 11 treibt über ein Differential 16 zwei Halbachsen 17, 18 an. Im Getriebe 9 ist auf die Abtriebswelle 11 eine federbelastete Lamellenbremse 19 montiert. Mit der Lamellenbremse 19 ist ein federbelasteter Kolben 20 in einem Zylinder 21 verbunden.

In den Zylinder 21 mündet eine Leitung 22, die über ein hochdruckgesteuertes 3/2-Wegeventil 23 und eine Leitung 24 mit der Servopumpe 3 oder einem druckfreien Rücklauf 25 verbunden ist. Die Steuerung des hochdruckgesteuerten 3/2-Wegeventils 23 ist über Druckleitungen 26, 27 an die Arbeitsleitungen 5, 6 angeschlossen.

Eine Zweipunktverstelleinrichtung 28 mit einem Kolben 29 in einem Zylinder 30 regelt den Hydraulikmotor 7, Der Zylinder 30 ist über ein 3/2-Wegeventil 31 und eine Leitung 32 an den Servodruck oder an den drucklosen Rücklauf angeschlossen. Die Betätigung des 3/2-Wegeventils 31 erfolgt in der üblichen Art und Weise durch Elektromagnet oder Druckbeaufschlagung.

Das mechanische Zweistufengetriebe wird hydraulisch geschaltet. In einem Zylinder 33 wird ein Kolben 34 alternativ von der einen oder anderen Seite mit dem Servodruck beaufschlagt. Ein 4/2-Wegeventil 35 verbindet in Abhängigkeit von seiner Stellung eine Seite des Kolbens mit dem Servodruck und die andere Kolbenseite mit dem drucklosen Rücklauf. Ein Überdruckventil 36 sichert das Servodruckleitungssystem gegen Überbelastungen.

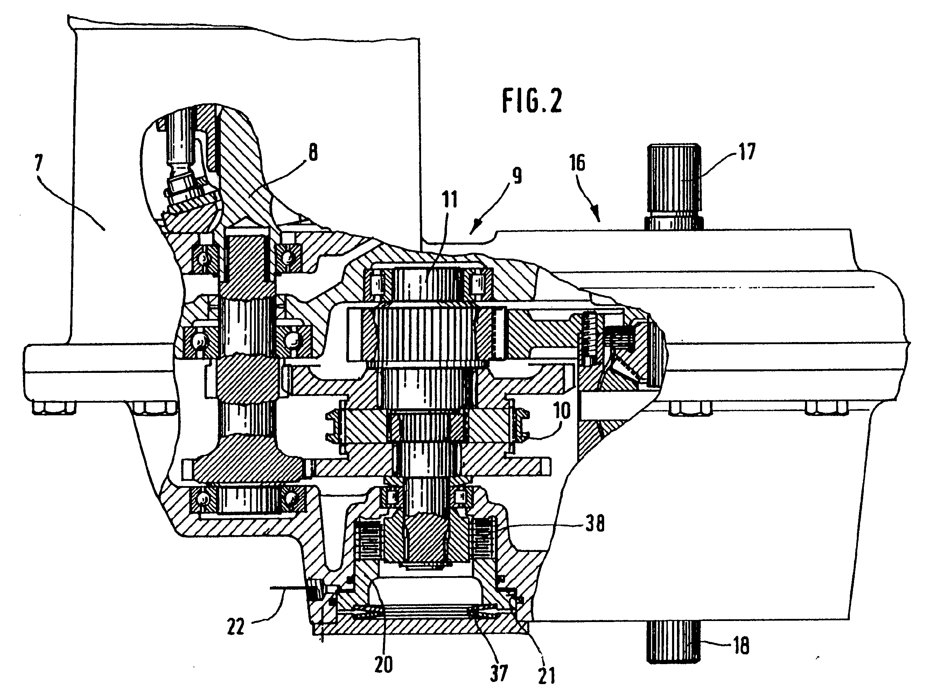

Fig. 2 : Der Hydromotor 7 ist in bekannter Weise an das mechanische Zweistufengetriebe 9 angeflanscht. Die Antriebswelle 8 vom Hydromotor 7 treibt in Abhängigkeit von der Stellung des Schaltrings 10 die Abtriebswelle 11 und somit auch die Halbachsen 17 und 18 mit veränderlicher Drehzahl an. Auf die Abtriebswelle 11 ist die Lamellenbremse 19 montiert. Der Kolben 20 und der Zylinder 21 sind über die Leitung 22 mit dem hochdruckbeaufschlagten 3/2-Wegeventil 23 verbunden. Auf den Kolben 20 wirkt ebenfalls eine vorgespannte Feder 37, die den Kolben 20 gegen Lamellen 38 der Lamellenbresme 19 drückt.

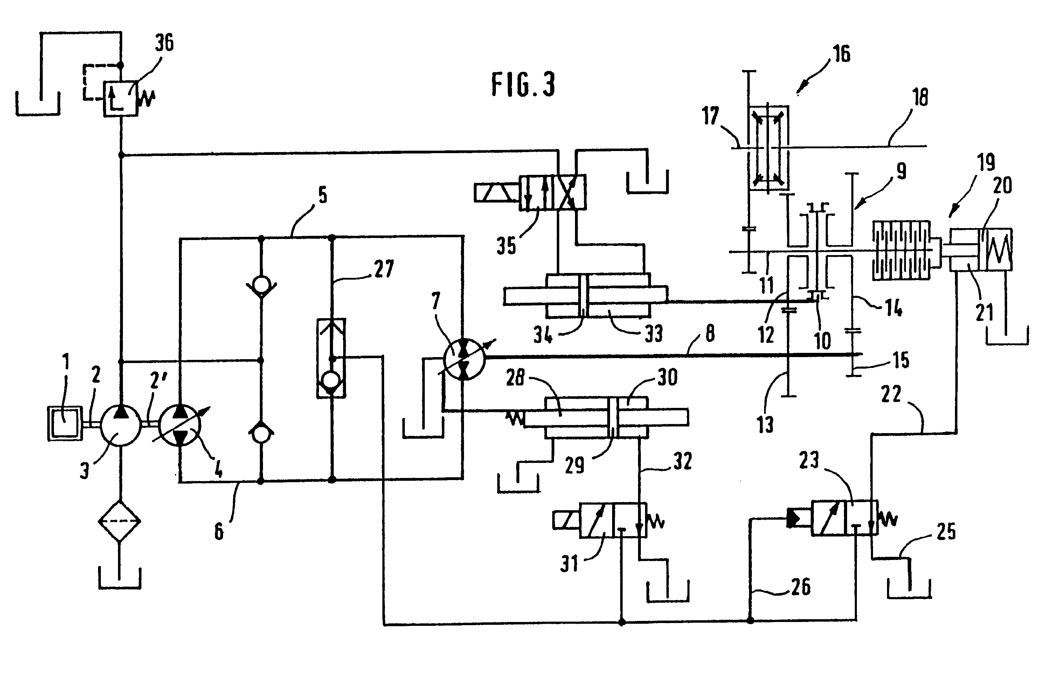

Fig. 3 : Die Leitung 24 kann entfallen, indem man die Druckanschlüsse der beiden 3/2-Wegeventile 23, 31 mit der Druckleitung 26 verbindet. Dadurch vereinfacht sich das Druckleitungssystem erheblich.

Funktionsbeschreibung :

Bei stillstehendem Motor 1 sind das Servodrucksystem und die Leitungen 5, 6, 27 drucklos. Daraus ergibt sich, daß das druckbeaufschlagte 3/2-Wegeventil 23 sich in der in Fig. 1 gezeigten Stellung befindet, und der Zylinder 21 mit dem drucklosen Rücklauf 25 verbunden ist. Die Lamellenbremse 19 ist durch eine Feder zusammengedrückt und das Fahrzeug somit gegen Wegrollen gesichert.

Nach Inbetriebnahme des Motors 1 baut die Servopumpe 3 den Servodruck auf. Sowie die Pumpe 4 so verstellt wird, daß sie zu fördern beginnt, steht der Betriebsdruck des hydrostatischen Getriebes in den Leitungen 5 oder 6 sowie den Druckleitungen 27, 26 an. Der Betriebsdruck stellt das 3/2-Wegeventil 23 so, daß die Leitung 24 in Verbindung mit der Leitung 22 steht und auf den Kolben 20 der Servodruck wirkt, so daß der Kolben 20 sich gegen die Federkraft verschiebt und die Feststellbremse 19 gelüftet wird.

Da das hydraulische Druckmedium auch den Hydromotor 7 antreibt, kann sich das Fahrzeug in Abhängigkeit von den vom Fahrer zu wählenden Übersetzungen des hydrostatischen und des mechanischen Getriebes in Bewegung setzen.

Bezugszeichen

| 1 | Dieselmotor |
|---|---|
| 2 | Antriebswelle |
| 3 | Servohydraulikpumpe |
| 4 | Hydraulikpumpe |
| 5 | Arbeitsleitung |
| 6 | Arbeitsleitung |
| 7 | verstellbarer Hydromotor |
| 8 | Antriebswelle |
| 9 | mechanisches Getriebe |
| 10 | Schaltring |
| 11 | Abtriebswelle |
| 12 | Stirnrad |
| 13 | Stirnrad |
| 14 | Stirnrad |
| 15 | Stirnrad |
| 16 | Differential |
| 17 | Halbachse |
| 18 | Halbachse |
| 19 | Lamellenbremse |
| 20 | Kolben, federbelastet |
| 21 | Zylinder |
| 22 | Leitung |
| 23 | 3/2-Wegeventil, druckbeaufschlagt (Hochdruck) |
| 24 | Leitung |
| 25 | druckfreier Rücklauf |
| 26 | Druckleitung |
| 27 | Druckleitung |
| 28 | Zweipunktverstelleinrichtung |
| 29 | Kolben |
| 30 | Zylinder |
| 31 | 3/2-Wegeventil |
| 32 | Leitung |
| 33 | Zylinder |
| 34 | Kolben |
| 35 | 4/2-Wegeventil |
| 36 | Überdruckventil |
| 37 | Feder |
| 38 | Lamellen |

**Patentansprüche**

1. Hydrostatisch-mechanisches Antriebssystem, insbesondere für Land- und Baumaschinenfahrzeuge, mit einem verstellbaren hydrostatischen Getriebe (4, 7) und einem in Reihe nachgeschalteten mechanischen Zweistunfengetriebe (9), wobei ein hydraulisches Druckmedium in dem hydrostatischen Getriebe zur Steuerung des hydrostatisch-mechanischen Antriebssystems herangezogen wird, dadurch **gekennzeichnet**, daß in das mechanische Zweistufengetriebe (9) eine mechanische Feststellbremse (19) integriert ist, die direkt auf dessen Abtriebswelle (11) wirkt und daß zur Betätigung der Feststellbremse (19) über eine Druckleitung (26) Druckmedium aus dem Hochdruckteil des hydrostatischen Kreislaufs abgezweigt und ein 3/2-Wegeventil (23) geschaltet wird, das einen Zylinder (21) der Feststellbremse (19) mit dem Druck einer Servohydraulikpumpe (3) des hydrostatischen Getriebes beaufschlagt oder mit einer druckfreien Rücklaufleitung (25) verbindet.

2. Hydrostatisch-mechanisches Antriebssystem nach Anspruch 1, dadurch **gekennzeichnet**, daß das hydrostatische Getriebe einen verstellbaren Hydromotor (7) aufweist und daß die Steuerungen des verstellbaren Hydromotors (7) und des mechanischen Zweistufengetriebes (9) in Abhängigkeit von einem Signal, das unabhängig vom Betriebszustand des hydrostatischen Getriebes ist, mit Druckmedium beaufschlagt werden.

## Claims

1. A hydrostatic-mechanical drive system for self-propelled agricultural and construction machines, with a variable hydrostatic drive (4, 7) and, mounted in series therewith and downstream thereof, a 2-speed mechanical gearbox (9), in which a hydraulic pressure medium in the hydrostatic drive is used for the control of the hydrostatic-mechanical drive system, **characterized** in that a mechanical parking brake (19) is integrated in the 2-speed mechanical gearbox (9) and acts directly on the output shaft (11) thereof, and that for the actuation of the parking brake (19), pressure medium is diverted via a pressure line (26) from the high-pressure portion of the hydrostatic circuit and in that a 3/2-way valve (23) is actuated which pressurizes a cylinder (21) of the parking brake (19) with pressure from a servo-hydraulic pump (3) of the hydrostatic drive or connects said cylinder (21) with an unpressurized return line (25).

2. A hydrostatic-mechanical drive system according to claim 1, **characterized** in that the hydrostatic drive has a variable hydraulic motor (7) and in that the control systems of the variable hydraulic motor (7) and of the 2-speed mechanical gearbox (9) are pressurized with pressure medium in response to a signal independent of the operating condition of the hydrostatic drive.

## Revendications

1. Dispositif d'entraînement hydrostatique-mécanique, notamment pour véhicules agricoles et de chantier, comportant une transmission hydrostatique variable (4, 7) suivie en série d'une boîte mécanique à deux vitesses (9), dans lequel un fluide de pression hydraulique de la transmission hydrostatique est utilisé pour la commande du dispositif d'entraînement hydrostatique-mécanique, caractérisé en ce qu'un frein mécanique de stationnement (19) est intégré dans la boîte mécanique à deux vitesses (9) et agit directement sur l'arbre de sortie (11) de ladite boîte, et en ce que, pour actionner le frein de stationnement (19), du fluide hydraulique est dérivé de la partie à haute pression du circuit hydrostatique au moyen d'un conduit de pression (26) et commande une vanne à 3/2 voies (23) qui délivre la pression de la servopompe (3) de la transmission hydrostatique à un vérin (21) du frein de stationnement (19) ou qui relie ce vérin à un conduit de retour (25) qui n'est pas sous pression.

2. Dispositif d'entraînement selon la revendication 1, caractérisé en ce que la transmission hydrostatique-mécanique comporte un moteur hydraulique réglable (7) et en ce que les moyens de commande du moteur hydraulique réglable (7) et de la boîte mécanique à deux vitesses (9) sont actionnés par le fluide hydraulique en fonction d'un signal indépendant de l'état de fonctionnement de la transmission hydrostatique.

FIG.1

FIG.2

EP 0 395 657 B1

FIG.3

EP 0 395 657 B1